# EUROPÄISCHE PATENTANMELDUNG

(11) **EP 1 538 134 A1**
(43) Veröffentlichungstag der Anmeldung: **08.06.2005**
(21) Anmeldenummer: 04028458.0
(22) Anmeldetag: 01.12.2004
(51) Int. Cl.: C04B 35/80, C04B 38/00, C04B 35/76, C04B 41/51, C22C 1/10, F16D 69/02, F16D 65/00

(54) **Poröser Faser-Keramik-Verbundwerkstoff**

(30) Priorität: 04.12.2003 DE 10357070; 13.03.2004 DE 102004012407
(71) Anmelder: CeramTec AG, 73207 Plochingen (DE)
(72) Erfinder: Lenke, Ilka, 73207 Plochingen (DE); Theil, Dieter, 73728 Esslingen (DE); Rogowski, Dirk, 73061 Ebersbach a. d. Fils (DE)
(74) Vertreter: Uppena, Franz, Dr.

(57) **Zusammenfassung**

Sowohl keramische als auch intermetallische Werkstoffe weisen in der Regel eine sehr geringe Bruchdehnung von deutlich unter 0,3% auf und damit ein wenig schadenstolerantes Bruchverhalten. Um die Schadenstoleranz zu steigern ist es wichtig, die Bruchdehnung auf mindestens 0,3% oder mehr anzuheben. Das kann dadurch erreicht werden, dass beispielsweise Fasern aus Kohlenstoff oder Keramik oder Metallfasern in die Matrix eingebracht werden. Hierbei ist es wichtig, dass die Verteilung der Fasern in der Matrix homogen und/oder definiert ist. Es ist vorteilhaft und deshalb in der Regel erwünscht, wenn die Fasern zur Verstärkung eines Werkstoffs oder Bauteils in einer definierten, auf die Hauptbeanspruchung abgestimmten Richtung orientiert sind.

Erfindungsgemäß wird deshalb ein Faser-Keramik-Verbundwerkstoff vorgeschlagen, bestehend aus einer keramischen Matrix mit einem Porenanteil von 0 % bis zu 75 % und einem Faseranteil von 5 Vol% bis zu 30 Vol%, wobei die Fasern eine homogene und/oder definierte Verteilung in der Matrix aufweisen und ihre Menge und ihre Ausrichtung in Bezug auf die Werkstoffbelastung optimiert ist.

## Beschreibung

Die Erfindung betrifft einen porösen Faser-Keramik-Verbundwerkstoff zur Herstellung eines Vorkörpers oder Bauteils, ein Verfahren zu seiner Herstellung sowie die Verwendung eines Vorkörpers oder Bauteils.

Faserverstärkte Kunststoffe und Metalle sind Stand der Technik. Beispielsweise werden Vorkörper aus Keramik- oder Kohlefasem als Bauteil oder als Segment eines Bauteils mit einer Metallschmelze infiltriert. Ebenfalls bekannt ist die Herstellung dichter keramischer Bauteile aus porösen keramischen Vorkörpern durch Verdichtungsprozesse wie z.B. Flüssigphasensintern, Reaktionssintern oder sogenanntes Reaction-Bonding.

Eine Möglichkeit der Herstellung eines Metall-Keramik-Verbundwerkstoffs (MKV) auch als Metal Matrix Composites (MMC) bezeichnet, oder eines intermetallischen Werkstoffes, auch Intermetallic Composites (IMC) genannt, ist das Infiltrieren von porösen keramischen Formkörpern mit flüssiger Metallschmelze. Im Falle des IMC-Werkstoffs kann die Reaktion zwischen Metall und Keramik zur intermetallischen Phase entweder bereits während des Gießprozesses erfolgen oder während einer anschließenden Wärmebehandlung. Verbundwerkstoffe mit einem geringeren Metallanteil als 50% werden beispielsweise als Keramik-Matrix-Verbundwerkstoff, Ceramic-Matrix-Composite (CMC), bezeichnet.

Sowohl keramische als auch intermetallische Werkstoffe weisen in der Regel eine sehr geringe Bruchdehnung von deutlich unter 0,3% auf und damit ein wenig schadenstolerantes Bruchverhalten. Um die Schadenstoleranz zu steigern ist es wichtig, die Bruchdehnung auf mindestens 0,3% oder mehr anzuheben. Das kann dadurch erreicht werden, dass beispielsweise Fasern aus Kohlenstoff oder Keramik oder Metallfasern in die Matrix eingebracht werden. Hierbei ist es wichtig, dass die Verteilung der Fasern in der Matrix homogen und/oder definiert ist. Es ist vorteilhaft und deshalb in der Regel erwünscht, wenn die Fasern zur Verstärkung eines Werkstoffs oder Bauteils in einer definierten, auf die Hauptbeanspruchung abgestimmten Richtung orientiert sind.

Stand der Technik ist beispielsweise ein Keramik-Verbundwerkstoff, ein sogenanntes Ceramic Matrix Composite (CMC), bei dem ein Keramikverbund, der im Wesentlichen aus Siliziumcarbid und Silizium besteht, durch Kohlefasern verstärkt ist.

Es ist die Aufgabe der Erfindung, einen porösen Faser-Keramik-Verbundwerkstoff sowie ein Verfahren zur Herstellung eines Vorkörpers oder Bauteils aus diesem Werkstoff und die Verwendung der Vorkörper oder Bauteile vorzustellen.

Das keramische Pulver, das bei der Formgebung die Matrix für die Fasern bildet, enthält neben den anorganischen Bestandteilen des späteren Formkörpers organische Porosierungsmittel zur Erzeugung der Porosität sowie in bekannter Weise Binde- und Presshilfsmittel für die vorgesehene Formgebung. Die Porosierungsmittel und damit die Porengrößen im fertigen Formkörper liegen im Bereich zwischen 0,1 bis 100 µm. Die Poren können, je nach vorgesehener Verwendung des Formkörpers, offen oder geschlossen sein. Für eine Infiltration mit einer Metallschmelze können die Poren eine multimodale Verteilungen haben. Der angestrebte Porenanteil und die Porenstruktur wird sowohl auf den Formgebungs- und gegebenenfalls Infiltrationsprozess abgestimmt als auch auf die Eigenschaften des Formkörpers, und liegt im Bereich von 30 % bis 75 %. Bei einem zur Infiltration, beispielsweise mit Aluminium, vorgesehenen Formkörper kann das Verhältnis Fasern/Keramik bei etwa 5 bis 30 / 40 bis 15 Vol% liegen bei einem Porenanteil von etwa 55 %.

Als Fasermaterial eignen sich z.B. Kohlenstoff und Keramik wie beispielsweise Al₂O₃, Mullit oder Silikate. Die Faserdurchmesser liegen z.B. zwischen 1 und 20 µm, die Längen z.B. zwischen 0,5 und 15 mm. Insbesondere eignen sich auch Metalllegierungen wie beispielsweise Stahl, Edelstahl oder Speziallegierungen z.B. aus Titan-, Chrom-, Nickelbasislegierungen oder Edelmetallen. Die Länge der Fasern ist in der Regel deutlich größer, beispielsweise > 1 mm, als der Durchmesser des keramischen Sprühkorns, der beispielsweise zwischen 20 und 200 µm liegt. Typische Abmessungen von Metallfasem sind Durchmesser von 0,1 bis 0,8 mm und Längen von 3 bis 15 mm. Diese unterschiedlichen Abmessungen und Formen machen eine gemeinsame Aufbereitung der Rohstoffe unmöglich. Die Fasern können z.B. nicht bereits bei der Aufbereitung des Keramikpulvers eingebracht und mit diesem sprühgetrocknet werden.

In der Regel werden Faseranteile von 5 bis 30 Vol% im dichten MKV oder IMC benötigt. Werden die Fasern über einen Mischer dem Pulver trocken zugemischt und wird anschließend die Mischung in ein Presswerkzeug gefüllt, ergibt sich in der Regel keine homogene Verteilung der Fasern, da diese aufgrund ihrer höheren Dichte und ihrer Geometrie ein anderes Rieselverhalten aufweisen als das keramische Pulver. Zudem ist die Orientierung der Fasern regellos, was bei der Verdichtung zur Deformation der Fasern und dadurch bedingt zu erheblichen Rückstellmomenten führen kann, die wiederum zu Pressfehlern führen.

Eine weitere Aufgabe der Erfindung besteht darin, bei der Herstellung eines porösen keramischen Vorkörpers die mehr oder weniger starren Fasern, beispielsweise Metallfasern, homogen oder definiert und gegebenenfalls orientiert in dem Werkstoff und damit in einem Formteil aus dem erfindungsgemäßen Werkstoff anzuordnen sowie weiterhin die bestehende Orientierung der Fasern im Werkstoff während des Pressens weitestgehend beizubehalten.

Schwierig ist das beispielsweise in den Fällen, in denen die Beanspruchungsrichtung in die Richtung fällt, in der die Presskraft gewirkt hat. Unter dem Einfluss der Presskraft geben in der Regel die in Richtung der wirkenden Presskraft ausgerichteten Fasern dem Druck nach und knicken entweder ab oder weichen dem Druck aus und ordnen sich in unvorteilhafter Weise in Richtungen an, die außerhalb der Richtung der Hauptbelastung liegen.

Erfindungsgemäß kann das weitestgehend dadurch vermieden werden, dass die Orientierung der Fasern in der zu pressenden keramischen Masse "eingefroren" wird, so dass sich ihre Lage während des Pressvorgangs im Wesentlichen nicht ändert. Die Lage der Fasern, die in Richtung der Hauptbeanspruchung und damit parallel zur Pressrichtung ausgerichtet sind, bleibt im Wesentlichen erhalten. Dazu wird das keramische Matrixpulver mit den Fasern durch Zusatz von flüssigen und/oder festen Hilfsstoffen konfektioniert und die Partikel bzw. Granulate und Fasern beschichtet. Zur Konfektionierung können beispielsweise wässrige oder organische Lösungen von Polymeren wie z.B. Polyvinylalkohol eingesetzt werden. Durch relativ hohe Konzentration der Hilfsstoffe, beispielweise 10 wt-% einer 1%igen Lösung, in der Pulver-Faser-Mischung wird eine kaum noch rieselfähige Masse erzeugt, die in Granulatform vorliegen kann. Durch die Konsistenz dieser Masse wird eine Entmischung und Umorientierung der Fasern in der Matrix bei der Formfüllung und beim Pressvorgang erschwert und im günstigsten Fall sogar verhindert.

Anhand eines Ausführungsbeispiels wird das erfindungsgemäße Verfahren zur Herstellung einer solchen Masse vorgestellt. 2000 g einer sprühgetrockneten, gut rieselfähigen keramischen Masse werden mit 1200 g Metallfasern mit einem Durchmesser von 0,5 mm und einer Länge von 5 mm in einer rotierenden Granuliertrommel gemischt. Mit einem Zerstäuber werden 320 g einer 1 %igen Lösung von Polyvinylalkohol in Wasser in die rotierende Trommel eingesprüht und unter die Masse gemischt. Es entsteht eine feuchte Masse mit der Konsistenz von nassem Sand, in der die Metallfasern in alle drei Raumrichtungen orientiert sind. Diese Masse wird zum Pressen in eine Form der Abmessung 300 mm x 185 mm gefüllt und bei 500 bar spezifischem Pressdruck axial verdichtet. Die Orientierung der Fasern, insbesondere auch die parallel zur Pressrichtung, bleibt im Formkörper weitgehend erhalten.

Erfindungsgemäß kann eine homogene Verteilung der Fasern im Bauteil sowohl in der Fläche als auch im Volumen erreicht werden. Dazu wird das Presswerkzeug zum axialen oder isostatischen Trockenpressen schichtweise gefüllt. Es wechseln sich Schichten von keramischem Pulver mit Schichten von Fasern ab, wobei die Fasern nur einen gewissen Anteil oder die gesamte Fläche bedecken, und die Packungsdichte variabel ist. Die Lage der Fasern wird beim Einfüllen der nächsten Pulverschicht so abgedeckt, dass die Zwischenräume zwischen den Fasern aufgefüllt werden. Das Auffüllen der Zwischenräume kann auch durch Vibration unterstützt werden. Dabei muss aber beachtet werden, dass sich Fasern und Pulver nicht separieren. Verhindert werden kann das durch eine Beschichtung der Fasern, beispielsweise durch das verwendete Keramikpulver. Die Überdeckung der Faserschicht kann, je nach vorgesehenem Anwendungsfall, auch Null sein. In der Regel wird die Packungsdichte der Fasern so gering gewählt, dass die einzelnen Pulverschichten in der Höhe eine durchgehende Matrix ausbilden können. Dabei sind die Dicken der eingebrachten Faser- und Pulverschichten variabel und liegen je nach Bauteilgröße und Anwendung z.B. im Bereich von 0,5 bis 20 mm.

Das Einbringen der einzelnen Faser- und Pulverschichten kann z.B. über Rutschen oder Rüttelrinnen erfolgen, die über die Pressform, die Matrize, geführt werden oder durch ein relativ zur Füllvorrichtung bewegtes Werkzeug. Hierbei kann sich entweder das Werkzeug im Verhältnis zur Füllvorrichtung bewegen, bei runden Werkzeugen z.B. rotieren, oder umgekehrt. Mittels des Winkels und dem Abstand der Füllvorrichtung zum Werkzeugboden bzw. zur Pulverschicht wird die Ausrichtung der Fasern bestimmt. Durch eine vorgeschaltete vibrierende Vorrichtung können die Fasern mehr oder weniger vereinzelt und ausgerichtet werden.

Die Befüllung der Pressform mit Pulvern und Fasern kann aber auch mittels mehrer Füllvorrichtungen kontinuierlich und zeitgleich erfolgen, wobei eine über die Bauteilhöhe homogene oder gradierte Verteilung und/oder Ausrichtung der Fasern erzeugt werden kann.

Bei magnetisierbaren Fasern kann das Füllen der Pressform statt über direkte Zuführungen auch über Vorrichtungen mit ein- und ausschaltbaren Elektromagneten erfolgen. Die Stärke des oder der Magnete, die Zuführung der Fasern zum Magnet, die Position über der Pressform und der Zeitpunkt des Ausschaltens bestimmen dann die Verteilung und die Ausrichtung der Fasern.

Eine homogene und/oder gerichtete Verteilung kann ebenfalls erreicht werden, wenn mit Fasern bestückte organische grobmaschige Gewebe schichtweise in die Pressform auf vorher eingefüllte Pulverschichten gelegt werden. Durch das grobmaschige Gewebe ist eine Pulververteilung in vertikaler Richtung möglich. Die organischen Gewebe werden durch die Temperaturbehandlung herausgebrannt.

Eine weitere Möglichkeit ist die Einbringung der Fasern als selbsttragendes Gerüst, beispielsweise als Stahlwolle. Das Gerüst wird vor beziehungsweise bei der Formgebung in der Form mit Keramikpulver oder -dispersionen ausgefüllt.

Als formgebendes Verfahren kann auch die Extrusion gewählt werden. Dabei werden die keramischen Pulver nicht durch Sprühtrocknen aufbereitet. Die keramischen Pulver und die weiteren Roh- und Hilfsstoffe werden zu einer plastischen Masse verarbeitet, die danach stranggepresst wird. Die Fasern werden dem zu erzeugenden Strang durch Speiser zugeführt. Die Ausrichtung der Speiser zum Massestrang und die Bewegungsabläufe der Masse relativ zu den Speisern und innerhalb der Misch- und Formgebungsvorrichtung bestimmen die Aussichtung der Fasern im Grünkörper.

Werden die Fasern nicht bereits bei der Erzeugung des Strangs in die keramische Masse eingespeist, können sie nachträglich durch sogenanntes Rollcompacting in die Masse eingebracht werden. Dabei werden die Fasern per Walzen in die plastische Masse eingerollt. Aus der Mischung werden Schichten geformt. Diese Schichten werden dann aufeinandergelegt und durch Druck zusammengefügt beziehungsweise laminiert.

Das Warmgießen von Massen ist eine weitere Möglichkeit zur Herstellung eines Faser-Keramik Verbundes mit homogener Faserverteilung. Dabei wird die Viskosität der Masse beispielsweise durch die Auswahl geeigneter Wachse und der Temperatur so eingestellt, dass die Fasern sich beim Einfüllen in das Presswerkzeug nicht vom keramischen Pulver und den Roh- und Hilfsstoffen separieren.

Die Rieselfähigkeit und das Streuverhalten von Fasern und ihr Verhalten in der Keramikmatrix bei der Formgebung und im späteren Formkörper oder Verbund kann durch Beschichtungen zusätzlich eingestellt werden. In Frage kommen Pulverbeschichtungen z.B. mit dem Matrixpulver, um die Sedimentation und das Zusammenballen der Fasern während der Formgebung zu verringern, oder Beschichtungen mit zusätzlichen Stoffen. Ebenso ist eine Beschichtung der Fasern mit organischen Hilfsstoffen möglich, um eine Fixierung in der Matrix während des Füll- und Formgebungsprozesses zu gewährleisten. Die Beschichtung kann dabei aus einer dünnen Hülle bestehen, oder aber aus einem relativ dicken, mehrschichtigem Aufbau z.B. aus Hilfsstoffen und abgeschiedenen Pulverteilchen.

Ein poröser keramischer Körper mit homogen beziehungsweise definiert verteilten und/oder ausgerichteten Fasern kann für einen funktionsoptimierten porösen Körper verwendet werden wie zum Beispiel Verdampferstäbchen, Filtermaterial oder Dämmstoffe. Über die Auswahl des Faserwerkstoffs kann z.B. die Wärmeleitfähigkeit und Wärmekapazität eingestellt werden. Ein poröser Keramik-Faser-Körper kann aber auch insbesondere zur Herstellung von MetallKeramik Verbundwerkstoffen (MMC) oder von keramischen Werkstoffen oder intermetallischen Verbundwerkstoffen (IMC) mit verbesserter Bruchdehnung verwendet werden. Dies ist insbesondere für tribologische und mechanische Anwendungen von Interesse oder bei Bauteilen mit besonderen Sicherheitsanforderungen oder Funktionseigenschaften. Dazu gehören beispielsweise Grund- und Gegenkörper für Friktionssysteme oder tribologische Anwendungen wie beispielsweise Bremstrommeln, Bremsbeläge, Kupplungen u.ä., Lagerbrücken und mechanisch extrem beanspruchte Bauteile im Maschinenbau.

Anhand eines Ausführungsbeispiels wird die Herstellung eines Vorkörpers oder Bauteils aus dem erfindungsgemäßen porösen Faser-Keramik-Verbundwerkstoff beschrieben.

In eine Pressform mit einem Durchmesser von 40 mm wurde ein Granulat aus Titanoxid, 16 Vol% Porosierungsmittel und 4 Vol% organischem Binder jeweils im Wechsel mit Metallfasern aus Edelstahl eingestreut. Die Metallfasern hatten Durchmesser von etwa 0,25 mm und Längen von etwa 5 mm. Insgesamt wurden fünf Schichten Metallfasern und sechs Schichten Keramikgranulat abwechselnd so eingestreut, dass die unterste und die oberste Schicht aus Keramikgranulat bestand. Die Granulatschichten hatten Dicken von etwa 3 mm, der Gesamtfaseranteil betrug 25 Vol%. Die Fasern waren horizontal ausgerichtet. Dieser Schichtaufbau wurde anschließend mit einem Druck von 70 MPa axial verpresst und bei 1000 °C eine Stunde gesintert. Das Sinterteil hatte eine Höhe von etwa 8 mm und eine Gesamtporosität von 58 %. Trotz des hohen Faseranteils entstanden weder bei der Formgebung noch nach dem Sintern Fehler in Form von Rissen.

## Patentansprüche

1. Faser-Keramik-Verbundwerkstoff, bestehend aus einer keramischen Matrix mit einem Porenanteil von 0 % bis zu 75 % und einem Faseranteil von 5 Vol% bis zu 30 Vol%, wobei die Fasern eine homogene und/oder definierte Verteilung in der Matrix aufweisen und ihre Menge und ihre Ausrichtung in Bezug auf die Werkstoffbelastung optimiert ist.

2. Faser-Keramik-Verbundwerkstoff nach Anspruch 1, **dadurch gekennzeichnet, dass** die Porengröße zwischen 0,1 µm und 100 µm liegt.

3. Faser-Keramik-Verbundwerkstoff nach Anspruch 1 oder 2, **dadurch gekennzeichnet, dass** der Porenanteil zwischen 30 % und 75 % liegt und auf den Formgebungs- und gegebenenfalls Infiltrationsprozess abgestimmt wird.

4. Faser-Keramik-Verbundwerkstoff nach Anspruch 1 bis 3, **dadurch gekennzeichnet, dass** der Durchmesser des Sprühkorns des keramischen Werkstoffs zwischen 20 µm und 1000 µm liegt.

5. Faser-Keramik-Verbundwerkstoff nach einem der Ansprüche 1 bis 4, **dadurch gekennzeichnet, dass** die Fasern aus Kohlenstoff bestehen.

6. Faser-Keramik-Verbundwerkstoff nach einem der Ansprüche 1 bis 4, **dadurch gekennzeichnet, dass** die Fasern aus einem keramischen Werkstoff bestehen.

7. Faser-Keramik-Verbundwerkstoff nach Anspruch 6, **dadurch gekennzeichnet, dass** die Fasern aus Oxiden wie Al₂O₃, Mullit oder Silkaten bestehen.

8. Faser-Keramik-Verbundwerkstoff nach Anspruch 6 oder 7, **dadurch gekennzeichnet, dass** die Fasern Längen von 0,5 mm bis 15 mm und Durchmesser von 1 µm bis 20 µm aufweisen.

9. Faser-Keramik-Verbundwerkstoff nach einem der Ansprüche 1 bis 4, **dadurch gekennzeichnet, dass** die Fasern aus einem metallischen Werkstoff bestehen.

10. Faser-Keramik-Verbundwerkstoff nach Anspruch 9, **dadurch gekennzeichnet, dass** die Fasern aus Stahl, Edelstahl oder Sonderlegierungen wie z.B. Titan-, Chrom-, Nickelbasislegierungen oder Edelmetallen bestehen.

11. Faser-Keramik-Verbundwerkstoff nach Anspruch 9 oder 10, **dadurch gekennzeichnet, dass** die Fasern Längen von 3 mm bis 15 mm und Durchmesser von 0,1 mm bis 0,8 mm aufweisen.

12. Faser-Keramik-Verbundwerkstoff nach einem der Ansprüche 1 bis 11, **dadurch gekennzeichnet, dass** durch die Wahl des Faserwerkstoffs die Wärmeleitfähigkeit und die Wärmekapazität des Verbundwerkstoffs eingestellt wird.

13. Faser-Keramik-Verbundwerkstoff nach einem der Ansprüche 1 bis 12, **dadurch gekennzeichnet, dass** er eine Bruchdehnung von mindestens 0,3 % aufweist.

14. Verfahren zur Herstellung eines Vorkörpers oder Bauteils aus einem Faser-Keramik-Verbundwerkstoff nach einem der Ansprüche 1 bis 13, **dadurch gekennzeichnet, dass** zunächst in die Pressform, die Matrize eines Presswerkzeugs, eine Lage Keramikpulver in einer zuvor festgelegten Höhe, die sich nach der Verwendung des Bauteils richtet, aufgefüllt wird, dass darauf eine Schicht Fasern in einer definierten Ausrichtung der Fasern und definierten Dicke der Lage, in Abhängigkeit von der Verwendung und der daraus resultierenden Belastung des Bauteils, abgelegt wird, dass darauf eine Lage Keramikpulver so abgelegt wird, dass es in die Zwischenräume der Fasem rieselt und sie ausfüllt, dass die Ablage des Keramikpulvers so lange fortgesetzt wird, bis die Fasern in einer vordefinierten Höhe überdeckt sind, wobei die Überdeckung auch Null sein kann, und dass darauf wieder eine Lage Fasern abgelegt wird und dass die wechselseitige Ablage von Fasern und Keramikpulver so lange fortgesetzt wird, bis die Form gefüllt ist, dass die letzte Lage aus Keramikpulver besteht und dass das Keramikpulver mit einem definierten Anteil von Porosierungsmitteln und gegebenenfalls organischen Binde- und Presshilfsmitteln versetzt wurde und dass der Werkstoff in bekannter Weise in die vorgegebene Form gepresst wird.

15. Verfahren nach Anspruch 14, **dadurch gekennzeichnet, dass** die Höhe und Packungsdichte der Faserschicht so gewählt wird, dass die Pulverschichten eine durchgehende Matrix bilden können.

16. Verfahren nach Anspruch 14 oder 15, **dadurch gekennzeichnet, dass** die Faser- und Pulverschichten in Abhängigkeit von der Bauteilgröße in Höhen zwischen 0,5 mm bis 20 mm gebildet werden.

17. Verfahren nach einem der Ansprüche 14 bis 16, **dadurch gekennzeichnet, dass** das Einbringen der Fasern und des Pulvers über Rutschen oder Rüttelrinnen erfolgt.

18. Verfahren nach einem der Ansprüche 14 bis 17, **dadurch gekennzeichnet, dass** durch den Winkel und den Abstand der Füllvorrichtung zum Pressformboden beziehungsweise zur Pulverschicht die Ausrichtung der Fasern bestimmt wird.

19. Verfahren nach einem der Ansprüche 14 bis 18, **dadurch gekennzeichnet, dass** die Fasern durch eine der Füllvorrichtung vorgeschaltete vibrierende Vorrichtung vereinzelt und ausgerichtet werden.

20. Verfahren nach einem der Ansprüche 14 bis 16, **dadurch gekennzeichnet, dass** das Zuführen und die Verteilung und Ausrichtung magnetisierbarer Fasern mittels Magnete erfolgt.

21. Verfahren nach einem der Ansprüche 14 bis 20, **dadurch gekennzeichnet, dass** das Füllen der Pressform mittels getrennter Füllvorrichtungen für Pulver und Fasern zeitgleich erfolgt.

22. Verfahren zur Herstellung eines Vorkörpers oder Bauteils aus einem Faser-Keramik-Verbundwerkstoff nach einem der Ansprüche 1 bis 13, **dadurch gekennzeichnet, dass** zunächst in die Matrize eines Presswerkzeugs eine Lage Keramikpulver in einer zuvor festgelegten Höhe, die sich nach der Verwendung des Bauteils richtet, aufgefüllt wird, dass darauf ein mit Fasern bestücktes organisches Gewebe in einer definierten Dicke und mit einer definierten Ausrichtung der Fasern, die von der Verwendung und der daraus resultierenden Belastung des Bauteils abhängt, abgelegt wird, dass darauf eine Lage Keramikpulver so abgelegt wird, dass es in die Zwischenräume des Gewebes rieselt und sie ausfüllt, dass die Ablage des Keramikpulvers so lange fortgesetzt wird, bis dass das Gewebe in einer vordefinierten Höhe, die auch Null sein kann, überdeckt ist und dass darauf wieder eine Lage Gewebe abgelegt wird und dass die wechselseitige Ablage von Gewebe und Keramikpulver so lange fortgesetzt wird, bis dass die Form gefüllt ist, dass die letzte Lage aus Keramikpulver besteht und dass das Keramikpulver mit einem definierten Anteil von Porosierungsmitteln versetzt wurde und dass der Werkstoff in bekannter Weise in die vorgegebene Form gepresst wird.

23. Verfahren zur Herstellung eines Vorkörpers oder Bauteils aus einem Faser-Keramik-Verbundwerkstoff nach einem der Ansprüche 1 bis 13, **dadurch gekennzeichnet, dass** die Fasern ein selbsttragendes Gerüst bilden, das mit Keramikpulver oder einer Keramiksuspension ausgefüllt wird und dass der so entstandene Körper in bekannter Weise in die vorgesehene Form gepresst wird.

24. Verfahren zur Herstellung eines Vorkörpers oder Bauteils aus einem Faser-Keramik-Verbundwerkstoff nach einem der Ansprüche 1 bis 13, **dadurch gekennzeichnet, dass** das keramische Pulver mit Hilfsstoffen wie Wasser, organischen Plastifizierungsmitteln, beispielsweise Cellulose, Polymere, und Bindemitteln versetzt zu einer plastischen Masse verarbeitet wird, die danach stranggepresst wird, wobei die Fasern mittels Speiser dem Strangguss zugeführt werden und dass diese Masse in die Form gefüllt, gespritzt oder extrudiert wird.

25. Verfahren zur Herstellung eines Vorkörpers oder Bauteils aus einem Faser-Keramik-Verbundwerkstoff nach einem der Ansprüche 1 bis 13, **dadurch gekennzeichnet, dass** das keramische Pulver mit Hilfsstoffen wie Wasser oder organischen Lösungsmitteln, organischen Plastifizierungsmitteln, unter anderem Cellulose, Polymere, und Bindemitteln versetzt zu einer plastischen Masse verarbeitet wird, die danach geformt wird, wobei die Fasern anschließend in die Platten mittels Rollcompacting eingerollt werden, dass diese Masse schichtweise in die Pressform gefüllt und in bekannter Weise in die vorgesehene Form gepresst wird.

26. Verfahren zur Herstellung eines Vorkörpers oder Bauteils aus einem Faser-Keramik-Verbundwerkstoff nach einem der Ansprüche 1 bis 13, **dadurch gekennzeichnet, dass** das Keramikpulver mit entsprechenden Hilfsstoffen wie Wachsen gemischt wird, dass diese Mischung verflüssigt wird, dass die Fasern beigefügt werden, dass die Masse so in die Form eingefüllt wird, dass die Fasern eine vorgegebene Richtung einnehmen und dass die Masse dann in bekannter Weise verfestigt wird.

27. Verfahren zur Herstellung eines Vorkörpers oder Bauteils aus einem Faser-Keramik-Verbundwerkstoff nach einem der Ansprüche 1 bis 13, **dadurch gekennzeichnet, dass** das Keramikpulver mit den beigefügten Fasern mit flüssigen und/oder festen Hilfsstoffen konfektioniert und aus der Pulver-Faser-Mischung eine kaum noch rieselfähige Masse erzeugt wird, vergleichbar in der Konsistenz wie nasser Sand oder Granulat, und dass der Werkstoff in bekannter Weise in die vorgegebene Form gepresst wird.

28. Verfahren nach einem der Ansprüche 14 bis 27, **dadurch gekennzeichnet, dass** die Fasern zur Einstellung ihrer Rieselfähigkeit und ihres Streuverhaltens beschichtet werden.

29. Verfahren nach Anspruch 28, **dadurch gekennzeichnet, dass** die Beschichtung eine Pulverbeschichtung mit dem Keramikpulver ist.

30. Verfahren nach einem der Ansprüche 28 oder 29, **dadurch gekennzeichnet, dass** die Beschichtung aus mehreren Schichten besteht, aus organischen Hilfsstoffen in Form von Pulvern und/oder Flüssigkeiten und Keramikpulverteilchen.

31. Vorkörper oder Bauteil aus einem Werkstoff nach den Ansprüchen 1 bis 13, hergestellt nach einem Verfahren nach einem der Ansprüche 14 bis 30, zur Verwendung als poröser Körper beispielsweise in Form von Verdampferstäbchen, Filter oder Dämmplatte.

32. Vorkörper oder Bauteil aus einem Werkstoff nach den Ansprüchen 1 bis 13, hergestellt nach einem Verfahren nach einem der Ansprüche 14 bis 30, nach Infiltration mit einem entsprechenden Metall zur Verwendung bei starker tribologischer und mechanischer Beanspruchung, beispielsweise als Grund- und Gegenkörper für Friktionssysteme, Bremstrommeln, Bremsbeläge, Kupplungen, Lagerbrücken.
